# EUROPÄISCHE PATENTANMELDUNG

(11) **EP 0 916 381 A2**
(43) Veröffentlichungstag der Anmeldung: **19.05.1999**
(21) Anmeldenummer: 98121076.8
(22) Anmeldetag: 06.11.1998
(51) Int. Cl.: B01D 46/24, B01D 46/52

(54) **Produktabscheider**

(30) Priorität: 11.11.1997 DE 19749874; 29.11.1997 DE 19753070; 20.12.1997 DE 19757107
(71) Anmelder: Dieckmann, Peter, 24568 Kaltenkirchen (DE)
(72) Erfinder: Dieckmann, Peter, 24568 Kaltenkirchen (DE)
(74) Vertreter: Thomas, Götz

(57) **Zusammenfassung**

Die Erfindung betrifft einen Produktabscheider zur Abscheidung von Feststoffpartikeln aus einem Gasstrom, mit mindestens einer in einem Gehäuse (6) angeordneten, im wesentlichen zylindrischen Filterpatrone (28) mit einem auf ihrem gesamten Umfang vom Gasstrom durchströmten Filtermaterial (32), sowie einer Reinigungsvorrichtung zur Reinigung des Filtermaterials (32) auf einem Teil des Umfangs der Filterpatrone (28) mit Spülluft im Gegenstrom, die eine mit mindestens einer Luftaustrittsöffnung (54, 174) versehene Spüleinrichtung (52, 152) zum Beaufschlagen des Umfangsteils mit Spülluft und eine mit mindestens einer Einlaßöffnung (76, 204) versehene Auffangeinrichtung (64, 154) zum Auffangen der von der Spülluft mitgeführten abgereinigten Feststoffpartikel umfaßt, wobei die Spüleinrichtung (52, 152) und die Auffangeinrichtung (64, 154) einerseits und die Filterpatrone (28) andererseits in Bezug zueinander um eine Längsachse (24) der Filterpatrone (28) drehbar sind, wobei sich die Luftaustritts- bzw. Einlaßöffnungen (54, 174 bzw. 76, 204) entlang des zu reinigenden Umfangsteils der Filterpatrone (28) auf entgegengesetzten Seiten des Filtermaterials (32) gegenüberliegen. Die in die Einlaßöffnung (54, 174) der Auffangeinrichtung (64, 154) mitgeführten abgereinigten Feststoffpartikel werden entlang der vertikal ausgerichteten Filterpatrone (28) getrennt vom Gasstrom in einen unterhalb der Filterpatrone (28) angeordneten und mit dem Gehäuseinneren verbundenen Sammelbehälter (14, 148) transportiert.

## Beschreibung

Die Erfindung betrifft einen Produktabscheider zur Abscheidung von Feststoffpartikeln aus einem Gasstrom, mit mindestens einer in einem Gehäuse angeordneten, im wesentlichen zylindrischen Filterpatrone mit einem auf ihrem gesamten Umfang vom Gasstrom durchströmten Filtermaterial, sowie einer Reinigungsvorrichtung zur Reinigung des Filtermaterials auf einem Teil des Umfangs der Filterpatrone mit Spülluft im Gegenstrom, die eine mit mindestens einer Luftaustrittsöffnung versehene Spüleinrichtung zum Beaufschlagen des Umfangsteils mit Spülluft und eine mit mindestens einer Einlaßöffnung versehene Auffangeinrichtung zum Auffangen der von der Spülluft mitgeführten abgereinigten Feststoffpartikel umfaßt, wobei die Spüleinrichtung und die Auffangeinrichtung einerseits und die Filterpatrone andererseits in Bezug zueinander um eine Längsachse der Filterpatrone drehbar sind, wobei sich die Luftaustritts- bzw. Einlaßöffnungen entlang des zu reinigenden Umfangsteils der Filterpatrone auf entgegengesetzten Seiten des Filtermaterials gegenüberliegen, und wobei die in die Einlaßöffnung der Auffangeinrichtung mitgeführten abgereinigten Feststoffpartikel getrennt vom Gasstrom in einen unterhalb der Filterpatrone angeordneten und mit dem Gehäuseinneren verbundenen Sammelbehälter transportiert werden.

Produktabscheider mit zylindrischen Filterpatronen werden in zunehmendem Umfang zur Trockenreinigung staubbeladener Gasströme eingesetzt, zum einen, weil insbesondere bei Verwendung von Filterpatronen mit sternförmig gefaltetem Filtermaterial das Verhältnis zwischen Filterfläche und Raumbedarf äußerst günstig ist, und zum anderen, weil sich die Filterpatronen ohne Verwendung von Werkzeugen einfach und berührungsfrei austauschen lassen, was insbesondere bei toxischen oder gefährlichen Produkten von Vorteil ist.

Zur Reinigung derartiger Filterpatronen wird zumeist Luft im Gegenstrom durch das Filtermaterial geblasen, um anhaftende Feststoffpartikel abzulösen und mitzureißen. Die Reinigung erfolgt in der Regel entweder während eines Stillstands des Produktabscheiders oder bei Produktabscheidern mit mehreren Filterpatronen alternierend, indem der Gasstrom jeweils an einer der Filterpatronen vorbei gelenkt wird, so daß diese ohne Unterbrechung des Betriebs in den anderen Filterpatronen gereinigt werden kann. Dadurch wird jedoch während der Reinigung insbesondere bei Produktabscheidern mit wenigen Filterpatronen die Filterleistung nicht unwesentlich verringert.

Ein Produktabscheider der eingangs genannten Art, der eine kontinuierliche Reinigung ohne Beeinträchtigung der Filterleistung gestattet, wurde bereits in der am Prioritätstag der vorliegenden Anmeldung noch unveröffentlichten europäischen Patentanmeldung EP 0 806 233 A1 des Anmelders vorgeschlagen. Der in Fig. 5 dieser Anmeldung dargestellte Produktabscheider weist mehrere Filterpatronen auf, die um horizontale Drehachsen drehbar im Gehäuse gelagert sind und jeweils durch innerhalb der Patronen angeordnete Spülluftrohre auf einem Teil ihres Umfangs im Gegenstrom mit Spülluft beaufschlagbar sind. Eine an eine Außenwand des Gehäuses angrenzende, durch eine Trennwand vom Gehäuse getrennte Auffangeinrichtung weist mit Klappen verschlossene Einlaßöffnungen auf, die Luftaustrittsöffnungen der Spülrohre auf der Außenseite des Filtermaterials gegenüberliegen. Die Auffangeinrichtung mündet mit ihrem unteren Ende in einen unterhalb der Filterpatronen angeordneten Sammelbehälter für die Feststoffpartikel.

Dieser Produktabscheider weist jedoch einige Nachteile auf:
- Die Auffangeinrichtung muß sich über die gesamte Breite und Höhe des mit den Filterpatronen bestückten Oberteils des Abscheiders erstrecken, wodurch der Materialaufwand nicht unwesentlich vergrößert wird.
- Bei mehr als zwei nebeneinander angeordneten Filterpatronen ist zwischen benachbarten Filterpatronen eine weitere Auffangeinrichtung erforderlich. Dazu müssen zwischen die Filterpatronen jeweils zwei zusätzliche Trennwände eingezogen werden, wodurch der Material- und Bauaufwand weiter vergrößert wird.
- Wenn der Produktabscheider mehrere übereinander angeordnete Filterpatronen enthält, müssen außerdem die Einlaßöffnungen der Auffangeinrichtung durch Klappen verschließbar sein, so daß die von den oberen Filterpatronen abgereinigten Feststoffpartikel nicht wieder aus den Einlaßöffnungen herausgeblasen werden, die den mit Spülluft beaufschlagbaren Umfangssektoren der unteren Filterpatronen gegenüberliegen.
- Durch die ausschließlich horizontale Ausrichtung der Drehachsen der Filterpatronen wird das Anpassungsvermögen an unterschiedliche vorgegebene Einbaubedingungen eingeschränkt, beispielsweise weil die Filterpatronen zum Austausch in axialer Richtung aus dem Gehäuse entnommen werden müssen, so daß in dieser Richtung der Platzbedarf des Gehäuses mindestens dem Doppelten der Länge der Filterpatronen entspricht.

In der Schweizerischen Patentschrift Nr. 55498 ist ein anderer Produktabscheider offenbart, der ein Gehäuse und eine im Gehäuse angeordnete Filterpatrone aufweist, die jeweils auf einem Teil ihres Umfangs im Gegenstrom mit Spülluft gereinigt wird. Dazu ist in der Filterpatrone ein zu ihrer horizontalen Drehachse paralleles Spülluftrohr angeordnet, das an seiner Unterseite einen düsenförmigen Luftaustrittsschlitz besitzt. Dieser Schlitz befindet sich über einer schlitzförmigen Öffnung in der Wand des Gehäuses und einer schlitzförmigen Einlaßöffnung eines unter dem Gehäuse angeordneten, zum Spülluftrohr parallelen horizontalen Auffangrohrs, von wo aus die Feststoffpartikel nach einer Ablagerungsstelle, z.B. einem Auffangtrichter geschafft werden können. Die horizontale Ausrichtung des Auffangrohrs ist jedoch ungünstig, weil die Feststoffpartikel auf dem Boden des Auffangrohrs sedimentieren können, so daß es sich leicht zusetzt. Ein weiterer Nachteil des bekannten Produktabscheiders besteht darin, daß zur Reinigung kontinuierlich Spülluft in das Spülluftrohr zugeführt werden muß, da sonst staubbeladene Luft in umgekehrter Richtung durch den Schlitz in der Gehäusewand aus dem Auffangrohr in das Gehäuse angesaugt wird. Eine kontinuierliche Luftzufuhr durch den Schlitz in das Auffangrohr ist jedoch unmöglich, wenn die Luft nicht an anderer Stelle wieder nach außen abgeführt wird. Um einen Austritt von staubbeladener Spülluft in die Umgebung zu vermeiden, ist dann jedoch ein weiterer Filter erforderlich.

Bei einem aus der EP 0 378 100 bekannten Produktabscheider mit einer mit Spülluft im Gegenstrom auf einem Teil ihres Umfangs gereinigten drehbaren Filterpatrone ist die Einlaßöffnung der Auffangeinrichtung ebenfalls auf der Unterseite der horizontal ausgerichteten Filterpatrone angeordnet. Das Gehäuse ist hier links und rechts der Einlaßöffnung luftdicht in einen oberen, vom Gasstrom durchströmten Gehäuseteil und einen unteren Sammelbehälter unterteilt, wodurch das Filtermaterial nur auf einem Teil des Patronenumfangs vom Gasstrom durchströmt wird. Bei kontinuierlicher Spülluftzufuhr treten hier dieselben Probleme auf, wie im vorangehenden Absatz beschrieben.

Aus der GB 2 198 058 A ist weiter ein Filter bekannt, bei dem sich eine Spüleinrichtung und eine Auffangeinrichtung auf beiden Seiten des Filtermaterials gegenüberliegen, wobei das letztere sowohl in ebener als auch in zylindrischer Form und mit horizontaler oder vertikaler Ausrichtung vorliegen kann. Die Auffangeinrichtung ist als Absaugeinrichtung ausgebildet, so daß ebenfalls ein weiterer Filter oder Produktabscheider erforderlich ist, um die mit Feststoffpartikeln beladene abgesaugte Spülluft zu reinigen.

Weiter ist bereits ein Produktabscheider in Form eines aufrechtstehenden Taschenfilters bekannt, der im Inneren ein mit Düsen versehenes Spülluftrohr aufweist, das von einer der beiden Stirnseiten her in axialer Richtung in den Filter ragt und in Umfangsrichtung an seiner Innenseite vorbeibewegt werden kann, um jeweils einen Teil des Filterumfangs durch Druckluft zu reinigen, wie beispielsweise in der DE-A 23 37 980 beschrieben. Der jeweils mit Druckluft beaufschlagte Teil des Filterumfangs weist dort horizontal zur Seite hin, so daß die abgelösten Feststoffpartikel von der Druckluft im wesentlichen im rechten Winkel in den an der Außenseite des Filters nach oben strömenden Gasstrom eingetragen werden. Dadurch wird ein verhältnismäßig großer Anteil der abgereinigten Feststoffpartikel vom Gasstrom wieder mit nach oben geführt, so daß er nicht in den Sammelbehälter gelangt und die Reinigungsleistung relativ gering ist.

Ausgehend hiervon liegt der Erfindung die Aufgabe zugrunde, die zuvor genannten Nachteile eines Produktabscheiders der eingangs genannten Art zu überwinden bzw. ausgehend von den bekannten Produktabscheidern die Notwendigkeit eines zusätzlichen Filters für die produktbeladene Spülluft zu beseitigen, ohne dieselbe entgegen dem Gasstrom durch das Gehäuse zu führen.

Diese Aufgabe wird erfindungsgemäß durch die im Patentanspruch 1 angegebene Merkmalskombination gelöst.

Die vertikale Anordnung der Filterpatrone oder auch von mehreren Filterpatronen im Gehäuse ermöglicht den Bau von schlanken und verhältnismäßig hohen Produktabscheidern, deren Platzbedarf in einer Horizontalebene bei vergleichbarer Filterfläche sehr viel kleiner ist als der Platzbedarf eines Produktabscheiders mit horizontal oder schräg angeordneten Filterpatronen.

Außerdem kann dann die Auffangeinrichtung zum Beispiel ein Rohr mit verhältnismäßig kleinem Öffnungsquerschnitt umfassen, das an der Filterpatrone entlang nach unten in den vorzugsweise im unteren Teil des Gehäuses angeordneten Sammelbehälter verläuft, wodurch der Platzbedarf gegenüber einem Produktabscheider mit einer entlang einer Außenwand angeordneten und durch eine Trennwand abgeteilten Auffangeinrichtung verringert und überdies Material eingespart werden kann. Außerdem kann eine Sedimentation der Feststoffpartikel zwischen der Filterpatrone und der Einlaßöffnung der Auffangeinrichtung leichter vermieden werden.

Im Vergleich zu den bekannten Produktabscheidern ermöglicht es die erfindungsgemäße Merkmalskombination, die abgereinigten Feststoffpartikel ohne eine Vermischung mit dem Gasstrom und unterstützt durch die Schwerkraft in den Sammelbehälter abzuführen. Durch die Verbindung zwischen dem Sammelbehälter und dem Gehäuseinneren, vorzugsweise durch eine Anordnung des Sammelbehälters unterhalb der Filterpatrone in einem nicht vom Gasstrom durchströmten Unterteil des Gehäuses kann die Spülluft aus dem Sammelbehälter entgegen der Schwerkraft und über einen großen Strömungsquerschnitt zur Filterpatrone zurückströmen, so daß die mitgeführten Feststoffpartikel im Sammelbehälter sedimentieren, ohne daß eine Absaugung der Spülluft bzw. ein weiterer Filter für ihre Reinigung erforderlich ist.

Da die abgereinigten Feststoffpartikel nicht wieder in den Gasstrom gelangen und erneut auf der Filterpatrone abgeschieden werden können, ist die Reinigungswirkung des erfindungsgemäßen Produktabscheiders besser als diejenige handelsüblicher Produktabscheider. Dadurch steigt zum einen die Belastbarkeit der Filterpatrone, wodurch bei gleichbleibendem Volumenstrom weniger Filterfläche erforderlich ist und die Tiefe der Falten des Filtermaterials vergrößert werden kann. Der Produktabscheider läßt sich damit noch kompakter bauen.

In Produktabscheidern mit mehreren Filterpatronen kann außerdem durch deren vertikale Ausrichtung ein erneutes Absetzen der Feststoffpartikel auf einer benachbarten Filterpatrone vermieden werden. Damit können die Filterpatronen enger beieinander angeordnet werden, so daß bei gleicher Baugröße eine Vergrößerung der Filterfläche möglich ist.

Verglichen mit einer gleichzeitigen Abreinigung des gesamten Filterpatronenumfangs oder eines großen Teils desselben besteht ein weiterer Vorteil der erfindungsgemäßen Merkmalskombination darin, daß zur Reinigung nur eines kleinen Umfangssektors die Gebläseluft eines Mitteldruckgebläses bzw. ein schwächerer Druckluftimpuls ausreichend ist, so daß im unmittelbaren Anschluß an die Reinigung weniger Feinststaubpartikel durch die freiwerdenden, von der Reinigungsluft etwas aufgeweiteten Filteröffnungen hindurchtreten. Damit kann der Feinststaubgehalt der Reinluft verringert werden, was insbesondere bei toxischen Stäuben von großer Bedeutung ist. Im Unterschied zum Gegenstand der EP 0 378 100 ist keine schwer zu verwirklichende luftdichte Unterteilung des Gehäuses angrenzend an die Umfangsfläche der Filterpatrone erforderlich, und die letztere kann vollständig im Gasstrom angeordnet werden.

Gemäß einer ersten bevorzugten Alternative der Erfindung ist die Filterpatrone mittels eines Drehantriebs um ihre Längsachse drehbar, um die zu reinigenden Umfangsteile nacheinander an der Spüleinrichtung und der Auffangeinrichtung vorbeizubewegen, die ortsfest im Gehäuse angebracht sind.

Bei dieser Alternative kann die Auffangeinrichtung an ihrem oberen Ende mit einem Teil des mit Feststoffpartikeln beladenen Gasstroms beaufschlagt werden, so daß die bei der Reinigung vom Filtermaterial gelösten Feststoffpartikel von der Reinigungs- oder Spülluft in den staubbeladenen Gasstrom innerhalb der Auffangeinrichtung eingetragen und durch dessen Strömung unterstützt nach unten transportiert werden können.

Eine starke Verwirbelung der Reinigungsluft und des Gasstroms wird dabei gemäß einer weiteren vorteilhaften Ausgestaltung der Erfindung dadurch vermieden, daS sich der verfügbare Strömungsquerschnitt für die Reinigungsluft vor der Einmündung in den Gasstrom durch eine trichterförmige Ausbildung mehrerer übereinander entlang der Auffangeinrichtung angeordneter Einlaßöffnungen schräg nach unten verengt, so daß eine Art Venturidüse gebildet wird, in der die nach unten beschleunigte Reinigungsluft den Gasstrom nach unten mitreißt.

Eine zweite alternative Ausgestaltung der Erfindung sieht demgegenüber vor, daß die Spüleinrichtung und die Auffangeinrichtung mittels eines Drehantriebs um die Längsachse der Filterpatrone drehbar sind, um sie gemeinsam an den zu reinigenden Umfangsteilen der ortsfest im Gehäuse angebrachten Filterpatrone entlangzubewegen.

Eine synchrone Drehung der Spüleinrichtung und der Auffangeinrichtung kann zwar grundsätzlich mit zwei getrennten synchronisierten Drehantrieben für die Spüleinrichtung und die Auffangeinrichtung realisiert werden, so daß keinerlei Drehdichtung zwischen der Staubluftseite und der Reinluftseite des Produktabscheiders erforderlich ist. Da jedoch die Kosten zweier getrennter Drehantriebe größer sind und zudem einer der Antriebe auf der Staubluftseite angeordnet werden müßte, sieht eine bevorzugte Ausgestaltung der Erfindung vor, daß die Spüleinrichtung und die Auffangeinrichtung einen gemeinsamen Drehantrieb aufweisen, der zweckmäßig reinluftseitig angeordnet ist und die Spüleinrichtung dreht, die zweckmäßig im Inneren der Filterpatrone angeordnet und durch eine Öffnung in deren Boden drehfest mit der Auffangeinrichtung verbunden ist.

Um den Austausch der Filterpatrone zu erleichtern, ist die drehfeste Verbindung zwischen der Spüleinrichtung und der Auffangeinrichtung gemäß einer weiteren bevorzugten Ausgestaltung der Erfindung lösbar und vorzugsweise so ausgebildet, daß bei der Herstellung der Verbindung zwischen der Spüleinrichtung und der Auffangeinrichtung zum einen die Öffnung im Boden der Filterpatrone und zum anderen ein ringförmiger Spalt zwischen ihrem oberen Stirnende und einer gegenüberliegenden Anlagefläche des Gehäuses abgedichtet wird. Dazu sind sowohl im Bereich der Bodenöffnung als auch zwischen dem oberen Stirnende der Filterpatrone und der Anlagefläche zweckmäßig Dichtungen vorgesehen, die durch eine bei der Herstellung der Verbindung auf den Boden der Filterpatrone ausgeübte axialen Druckkraft gegen das Stirnende und die Anlagefläche bzw. um die Öffnung herum gegen den Boden der Filterpatrone angepreßt werden.

Beiden Alternativen ist gemeinsam, daß gemäß einer weiteren bevorzugten Ausgestaltung der Erfindung der Lufteinlaß des Produktabscheiders so angeordnet ist, daß sich nach dem Eintritt der Luft in das Gehäuse zum einen der Strömungsquerschnitt vergrößert und zum anderen der Gasstrom umgelenkt wird, um das Sedimentieren der Feststoffpartikel im Sammelbehälter zu erleichtern.

Um ein Abführen der abgereinigten Feststoffpartikel ohne das Erfordernis eines weiteren Produktabscheiders und ohne eine Speicherung der abgereinigten Feststoffpartikel im Gehäuse zu ermöglichen, ist weiter bei beiden Alternativen bevorzugt am unteren Ende des Sammelbehälters ein Produktaustrag mit einer Schleuse vorgesehen, die zweckmäßig als Zellenradschleuse ausgebildet ist und entweder bei kleineren Druckdifferenzen am unteren Ende des Sammelbehälters oder bei größeren Druckdifferenzen am Austragsende eines dort angebrachten Schneckenförderers angeordnet sein kann.

Eine weitere vorteilhafte Ausgestaltung beider Alternativen sieht vor, daß die Spülluft zum Reinigen des Filtermaterials durch die Spüleinrichtung einem Umfangsteil oder -sektor der Filterpatrone zugeführt wird, der zweckmäßig zwischen 1/6 bis 1/20 und vorzugsweise zwischen 1/10 bis 1/12 des Umfangs der Filterpatrone überdeckt. Die Spüleinrichtung umfaßt zweckmäßig mindestens ein im Inneren der Filterpatrone angeordnetes Spülluftrohr, das durch eine obere stirnseitige Reinluftaustrittsöffnung der Filterpatrone ins Innere der Filterpatrone ragt und in einem geringen Abstand vom Filtermaterial in axialer Richtung bis zum Boden der Filterpatrone verläuft. Das Spülluftrohr weist zweckmäßig horizontale oder schräg nach unten weisende Luftaustrittsöffnungen in Form von Bohrungen oder besser Schlitzen auf, die in Richtung der Einlaßöffnungen der Auffangeinrichtung auf der Außenseite der Filterpatrone ausgerichtet sind. Die Luftaustrittsöffnung oder -öffnungen sind vorzugsweise so bemessen, daß die Luft mit sehr hoher Geschwindigkeit aus den Öffnungen austritt, wodurch beim Austritt ein starker Sog erzeugt wird, der Reinluft aus dem Inneren der Filterpatrone in Richtung des Filtermaterials mitreißt. Diese Luft unterstützt die Reinigungswirkung der Spülluft.

Die Spülluft zur Reinigung des Filtermaterials kann stoßweise zugeführt werden, wobei sie in diesem Fall zweckmäßig aus einem wiederauffüllbaren Druckluftbehälter oder einer anderen Druckluftquelle stammt und Drücke zwischen 2 und 7 bar aufweist. Ein zwischen der Spüleinrichtung und dem Druckluftbehälter angeordnetes, vorzugsweise über den Drehantrieb der Filterpatrone bzw. der Spül- und Auffangeinrichtung angesteuertes Ventil führt der Spüleinrichtung immer dann einen Druckluftstoß zu, wenn sich die Filterpatrone bzw. die Spül- und Auffangeinrichtung um einen vorbestimmten Drehwinkel gedreht hat, wobei dieser Drehwinkel vorzugsweise etwa dem Öffnungswinkel des mit Spülluft beaufschlagbaren Umfangssektors der Filterpatrone entspricht.

Alternativ kann die Spülluft auch kontinuierlich zugeführt werden, wobei sie zweckmäßig mit einem Druck von etwa 0,2 bis 0,8 bar durch ein Gebläse erzeugt wird. Vorzugsweise wird in diesem Fall ein Teil des gereinigten Gasstroms als Spülluft verwendet, indem er in die Spüleinrichtung zurückgeführt wird.

Bei beiden Alternativen kann die Spülluft gegebenenfalls auch die Antriebsenergie für den Drehantrieb der Spüleinrichtung und der Auffangeinrichtung bzw. der Filterpatrone liefern, beispielsweise indem ein druckluftbetriebener Schwenkzylinder als Drehantrieb vorgesehen wird, dem alternierend zur Spüleinrichtung Druckluft zugeführt wird.

Die Auffangeinrichtung kann im einfachsten Fall eine einzige schlitzförmige Einlaßöffnung aufweisen, die sich entlang der gesamten Länge der Filterpatrone erstreckt. Vorzugsweise sind jedoch mehrere entlang der Filterpatrone übereinander angeordnete trichterförmige Einlaßöffnungen vorgesehen, um die Spülluft und die mitgerissenen Feststoffpartikel beim Eintritt in die Auffangeinrichtung zu beschleunigen.

Das untere Ende der Auffangeinrichtung mündet vorzugsweise in einen Abfuhrkanal für die Feststoffpartikel, der zweckmäßig schräg nach unten bis zur Längsachse der Filterpatrone und von dort in den im untersten Teil des Gehäuses angeordneten Sammelbehälter führt, so daß der Eintrag der Feststoffpartikel in den Sammelbehälter stets an derselben Stelle erfolgt.

Während sich der erfindungsgemäße Produktabscheider mit drehbarer Filterpatrone und ortsfester Spül- und Auffangeinrichtung besonders für solche Anwendungsfälle eignet, wo mehrere Filterpatronen nebeneinander in das Gehäuse eingesetzt sind, eignet sich der andere erfindungsgemäße Produktabscheider mit drehbarer Spül- und Auffangeinrichtung und ortsfest ins Gehäuse eingesetzter Filterpatrone besonders gut für solche Anwendungsfälle, wo die Abscheidung in einer einzigen Filterpatrone erfolgt. Da diese letztere sukzessive gereinigt wird, wobei immer nur ein kleiner Teil des Umfangs mit Spülluft beaufschlagt wird, während der Rest zur Abscheidung von Feststoffpartikeln aus dem Gasstrom zur Verfügung steht, kann der Produktabscheider im Dauerbetrieb gefahren werden, ohne daß seine Leistung durch die Reinigung wesentlich beeinträchtigt wird und ohne daß zur Reinigung Stillstandszeiten erforderlich sind. Besonders vorteilhaft lassen sich beide Alternativen des erfindungsgemäßen Produktabscheiders in mobilen Industriestaubsaugern oder in einem Tauchrohr eines Zyklons einsetzen, um im letzteren Fall gleichzeitig eine Grob- und Feinkornabscheidung zu ermöglichen.

Im folgenden wird die Erfindung anhand einiger in der Zeichnung dargestellter Ausführungsbeispiele näher erläutert. Es zeigen:
Fig. 1: eine teilweise geschnittene Seitenansicht eines erfindungsgemäßen Produktabscheiders;
Fig. 2: eine horizontale Querschnittsansicht des Produktabscheiders aus Fig. 1 entlang der Linie II-II.
Fig. 3: eine horizontale Querschnittsansicht eines weiteren erfindungsgemäßen Produktabscheiders;
Fig. 4: eine schematische vertikale Schnittansicht eines noch weiteren erfindungsgemäßen Produktabscheiders;
Fig. 5: eine horizontale Querschnittsansicht des Produktabscheiders aus Fig. 4 entlang der Linie V-V;
Fig. 6: eine schematische vertikale Teilschnittansicht eines noch anderen erfindungsgemäßen Produktabscheiders;
Fig. 7: eine teilweise geschnittene Seitenansicht eines in einem Tauchrohr eines Zyklons angeordneten erfindungsgemäßen Produktabscheiders;
Fig. 8: eine horizontale Querschnittsansicht des Produktabscheiders aus Fig. 7 entlang der Linie VIII-VIII.
Fig. 9: eine teilweise geschnittene Seitenansicht eines weiteren Zyklons, in dessen Tauchrohr ein anderer erfindungsgemäßer Produktabscheider eingesetzt ist;
Fig. 10: eine teilweise geschnittene Seitenansicht eines im Vergleich zum Produktabscheider aus Fig. 9 leicht modifizierten Produktabscheiders in größerem Maßstab;
Fig. 11: eine vergrößerte horizontale Querschnittsansicht eines Teils der Spüleinrichtung und der Auffangeinrichtung der Produktabscheider aus Fig. 9 und 10.

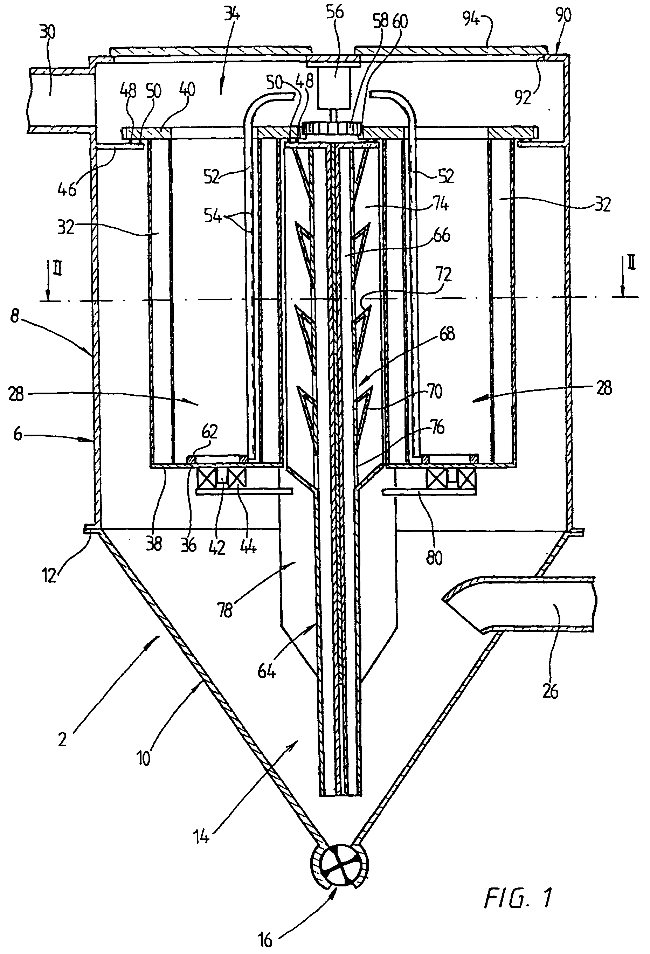

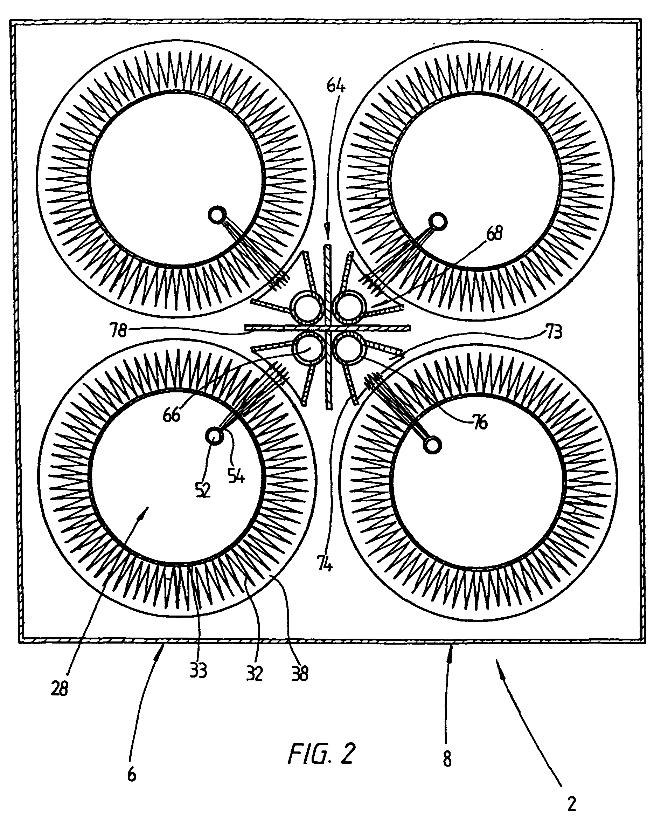

Der in den Figuren 1 und 2 dargestellte Produktabscheider 2 dient zur Abscheidung gröberer und feinerer Feststoffpartikel aus einem produktbeladenen Luftstrom, der von einem reinluftseitig angeordneten Gebläse (nicht dargestellt) durch den Produktabscheider 2 gesaugt wird, jedoch zum Beispiel bei der pneumatischen Befüllung von Schüttgutbehältern alternativ auch durch den Produktabscheider 2 gedrückt werden kann. Der Produktabscheider 2 besteht im wesentlichen aus einem geschlossenen Gehäuse 6 mit einem quaderförmigen Oberteil 8, das vier Filterpatronen 28 umschließt, sowie einem Unterteil 10 in Form einer umgekehrten Pyramide. Der Oberteil 8 und der Unterteil 10 des Gehäuses 6 sind entlang einer horizontalen Flanschverbindung 12 mittels Schnellverschlüssen (nicht dargestellt) verbunden, um den Austausch der Filterpatronen 28 zu erleichtern.

Der Gehäuseunterteil 10 umschließt einen Sammelbehälter 14 für die abgeschiedenen, am Boden des Gehäuseunterteils 10 sedimentierenden Feststoffpartikel. Der Sammelbehälter 14 mündet an seinem unteren Ende in einen als Zellenradschleuse 16 ausgebildeten Produktaustrag, aus dem die Feststoffpartikel nach unten in einen Transportbehälter (nicht dargestellt) fallen.

Der produktbeladene Luftstrom tritt an einem unterhalb des Flansches 12 im Gehäuseunterteil 10 angeordneten Lufteinlaß 26 in das Gehäuse 6 ein, durchströmt die vier nebeneinander im Gehäuseoberteil 8 angeordneten, parallel geschalteten Filterpatronen 28 und tritt durch einen am oberen Ende des Gehäuseoberteils 8 angeordneten Luftauslaß 30 wieder aus dem Gehäuse 6 aus.

Der Lufteinlaß 26 weist ein schräg nach unten umgebogenes Mundstück auf, um den Luftstrom beim Eintritt in das Gehäuse 6 etwas nach unten zu lenken. Hinter dem Lufteinlaß 26 erweitert sich der Strömungsquerschnitt des Luftstroms, so daß infolge der Abnahme der Strömungsgeschwindigkeit ein Teil der mitführten Feststoffpartikel aus dem Luftstrom abgeschieden wird, bevor dieser nach oben in den Gehäuseoberteil 8 umgelenkt wird. Im Gehäuseoberteil 8 steigt der Luftstrom mit den noch enthaltenen Feststoffpartikeln entlang der Außenseiten der Filterpatronen 28 nach oben, wobei er von außen nach innen durch das auf dem Umfang der Filterpatronen 14 angeordnete, sternförmig gefaltete Filtermaterial 32 hindurchtritt. Dabei werden die Feststoffpartikel auf der Außenseite des Filtermaterials 32 abgeschieden, während der gereinigte Luftstrom durch die offenen oberen Stirnenden der Filterpatronen 28 in eine auf der Oberseite des Gehäuses 6 angeordnete Reinluftabzugshaube 34 und anschließend durch den Luftaustritt 30 zum Gebläse geführt wird. Die Reinluft tritt dort in die Umgebung aus oder wird für eine erneute Beladung mit Feststoffpartikeln im Kreislauf zurückgeführt.

Die Filterpatronen 28 bestehen im wesentlichen aus einem zylindrischen Filterkorb 33 aus einem stabilen Lochblech oder Drahtgewebe mit einem geschlossenen Boden 36, sowie dem sternförmig gefalteten, um die Außenseite des Filterkorbs herumgelegten Filtermaterial 32, das beispielsweise aus einem Polyestervlies besteht und zwischen zwei am Boden 36 bzw. am offenen Ende der Filterpatrone 28 in radialer Richtung über den Filterkorb nach außen überstehenden Umfangsflanschen 38, 40 beispielsweise durch Eingießen in ein Vergußmaterial befestigt ist. Um ein Zusammenkleben einzelner Falten des sternförmig gefalteten Filtermaterials 32 zu verhindern, können in radialer Richtung über den Filterkorb überstehende und in die Falten eingreifende Separatoren vorgesehen sein, oder das Filtermaterial 32 kann mit eingeprägten stegförmigen Auswölbungen versehen sein, die über gegenüberliegende Seiten der durch die Faltung gebildeten V-förmigen Filtertaschen überstehen und diese aufgespreizt halten (nicht dargestellt). Zum Beispiel im Lebensmittelbereich oder zur Abscheidung heißer Stäube können alternativ auch Eilterpatronen 28 eingesetzt werden, bei denen das Filtermaterial 32 aus einem Edelstahlgewebe besteht.

Bei den Filterpatronen 28 handelt es sich um handelsübliche Filterpatronen, die dahingehend abgewandelt worden sind, daß sie an ihrem geschlossenen unteren Stirnende einen mittig über ihren Boden 36 überstehenden Wellenstumpf 42 aufweisen, der in einem unterhalb der Filterpatrone 28 angeordneten Drehlager 44 drehbar gelagert ist, so daS die Filterpatronen 28 um ihre vertikale Längsachse im Gehäuse 6 drehbar sind. Die Filterpatronen 28 stützen sich auf einer an ihrem offenen oberen Stirnende unterhalb des Flanschs 40 angeordneten horizontalen Filterpatronenhalterung 46 ab, die kreisförmige Öffnungen zur Aufnahme der vier Filterpatronen 28 aufweist. In den vom Umfangsflansch 40 überlappten Rand der Öffnungen sind zwei im Abstand angeordnete konzentrische Ringdichtungen 48, 50 eingesetzt, um das Gehäuseinnere gegenüber der Reinluftabzugshaube 34 abzudichten.

Um mit zunehmender Partikelbeladung ein Zusetzen der Filteröffnungen des Filtermaterials 32 der Filterpatronen 28 zu verhindern und eine gleichbleibende Filterwirkung sicherzustellen, werden die Filtertaschen auf der Außenseite des Filtermaterials 32 periodisch mit Druckluft gereinigt. Dabei werden über kurze Zeitintervalle jeweils mehrere benachbarte Filtertaschen von der Innenseite der Filterpatrone 28 her im Gegenstrom mit Druckluft beaufschlagt, d.h. entgegen der Strömungsrichtung des Luftstroms bei der Abscheidung der Feststoffpartikel. Bei der Reinigung werden jeweils in vorgegebenen Zeitabständen ein oder mehrere Umfangssektoren der Filterpatrone 28 von innen her impulsartig oder kontinuierlich mit Druckluft angeblasen, so daß diese mit hoher Geschwindigkeit durch das Filtermaterial 32 strömt und die auf der Außenseite anhaftenden Feststoffpartikel mitreißt. Bei Verwendung von Druckluft mit einem Druck von 2 bis 7 bar wird das Filtermaterial 32 zusätzlich in Schwingungen versetzt und dadurch für eine Ablösung der Feststoffpartikel gesorgt.

Die Druckluft wird durch stationäre Spülluftrohre 52 einer Spüleinrichtung zugeführt, welche mit einer Druckluftquelle (nicht dargestellt) verbunden sind. Die Spülluftrohre 52 ragen aus der Reinluftabzugshaube 34 ins Innere der Filterpatronen 28 und verlaufen dort im Abstand von der Längsachse in axialer Richtung nahezu bis zum Boden 36. Die außermittig angeordneten Spülluftrohre 52 weisen jeweils eine oder mehr Reihen von schlitzförmigen, in kurzen Abständen hintereinander in Längsrichtung des Spülluftrohrs 52 verlaufenden Luftaustrittsöffnungen 54 auf, welche die Wand des Spülluftrohrs 52 in radialer Richtung durchsetzen und auf den benachbarten Umfangssektor zu gerichtet sind. Die schlitzförmigen Öffnungen 54 weisen eine sehr geringe Öffnungsweite auf, so daß die Druckluft mit hoher Geschwindigkeit durch die Öffnungen 54 austritt und große Luftmengen aus dem Inneren der Filterpatrone 28 mitreißt, die zumindest teilweise ebenfalls durch das Filtermaterial 32 nach außen strömen und die Reinigungswirkung verbessern.

Um eine Reinigung sämtlicher Filtertaschen zu erreichen, werden die Filterpatronen 28 schrittweise oder kontinuirlich um ihre Längsachse gedreht und der jeweils vor den Luftaustrittsöffnungen 54 befindliche, in einem geringen Abstand von den Öffnungen 54 angeordnete Umfangssektor intermittierend mit einem kurzen Druckluftstoß beaufschlagt. Der Drehwinkel zwischen zwei Druckluftstößen entspricht vorzugsweise etwa dem Umfangswinkel des von der Druckluft beaufschlagten Umfangssektors, so daß eine gleichmäßige Reinigung sichergestellt wird.

Zur Drehung der Filterpatronen 28 dient ein Getriebemotor 56, der in der Mitte zwischen den vier Filterpatronen 28 an der Decke der Reinluftabzugshaube 34 angebracht ist und ein Ritzel 58 antreibt, das mit einer Außenverzahnung 60 auf dem Umfangsrand des Flansches 40 im Eingriff steht. Vorzugsweise ist zwischen dem Flansch 40 und dem Ritzel 58 ein drehbar gelagertes Hohlrad (nicht dargestellt) angeordnet, das auf seinem äußeren Umfang mit der Außenverzahnung 60 versehen ist und beispielsweise über eine Paßfederverbindung formschlüssig und vertikal verschiebbar mit dem Flansch 40 verbindbar ist, um den Austausch der Filterpatrone 28 zu erleichtern.

Zur Stabilisierung und zum Auffangen von Rückstoßkräften beim Austritt der Druckluft stützt sich das Spülluftrohr 52 mit seinem unteren Ende an einem über den Boden 36 der Filterpatrone 28 überstehenden Ring 62 ab, an dem es bei der Drehung der Filterpatrone 28 entlanggleitet.

Um zu verhindern, daS die bei der Reinigung der Filterpatronen 28 von der Reinigungsdruckluft mitgerissenen Feststoffpartikel wieder in den staubbeladenen Luftstrom eingetragen werden und erneut abgeschieden werden müssen, ist eine zentrale vertikale Auffangeinrichtung 64 in der Mitte des Gehäuses 6 zwischen den vier Filterpatronen 28 vorgesehen, welche sich im Quadrat um die Auffangeinrichtung 64 herum gruppieren, wie am besten in Fig. 2 dargestellt.

Die Auffangeinrichtung 64 besteht aus vier einzelnen Teilkanälen 66, die jeweils parallel zur Längsachse der benachbarten Filterpatrone 28 in gleichbleibendem Abstand von deren Außenseite nach unten in den Sammelbehälter 14 Führen, wo sie in einem geringen Abstand oberhalb des Produktaustrags 16 münden. Die Teilkanäle 66 werden jeweils von einem im Querschnitt zylindrischen Rohr gebildet, das unterhalb der Filterpatronen 28 eine geschlossene Wand aufweist und entlang der Filterpatronen 28 mit übereinander angeordneten trichterförmigen Einlaßöffnungen 68 versehen ist, die jeweils dem mit Druckluft beaufschlagbaren Umfangssektor der vier Filterpatronen 28 gegenüberliegen.

Die Einlaßöffnungen 68 werden an ihrer Oberseite und an ihrer Unterseite jeweils durch schräg nach unten zum Rohr 66 hin geneigte Bleche 70, 72 begrenzt, wobei die Neigung der Bleche 70 an der Oberseite der Einlaßöffnungen 68 größer als die Neigung der Bleche 72 an deren Unterseite ist. Die beiden Bleche 70, 72 und ein am unteren Ende der Filterpatronen 28 angeordnetes schräges Leitblech 73 sind an ihren entgegengesetzten Seitenrändern durch jeweils zwei vertikale Leitbleche 74 verbunden, die sich in Draufsicht ebenfalls in Richtung des Rohrs 66 verjüngen. Während die seitlichen Leitbleche 74 in einen sehr geringen Abstand von der Außenseite der Filterpatronen 28 enden, weist ein der Filterpatrone 28 zugewandter Rand der Bleche 70, 72 auf der Ober- und Unterseite der Einlaßöffnungen 68 einen größeren Abstand von der Außenseite der Filterpatronen 28 auf. Die in einer verhältnismäßig kleinen Aussparung 76 in der Rohrwand mündenden verjüngten Einlaßöffnungen 68 bewirken einerseits eine Beschleunigung der Reinigungsdruckluft und der mitgerissenen Feststoffpartikel und verhindern andererseits, daß Feststoffpartikel infolge der Sogwirkung des Luftstroms durch die Auffangeinrichtung 64 nach oben gesaugt werden, wenn die Filterpatronen 28 gerade nicht abgereinigt werden.

Die vier Rohre 66 werden von einer im Querschnitt kreuzförmigen Stütze 78 getragen, die an der Patronenhalterung 46 aufgehängt ist und gleichzeitig als Halterung für vier die Drehlager 44 tragende Ausleger 80 dient.

Zum Öffnen der Druckluftzufuhr sind die Spülluftrohre 52 außerhalb der Reinluftabzugshaube 34 mit Magnetventilen (nicht dargestellt) versehen, die über einen vom Drehantrieb 56 der Filterpatronen 28 aktivierten Signalgeber (nicht dargestellt) angesteuert werden. Das zu den Magnetventilen zugeführte Schaltsignal öffnet jeweils nach einem Verdrehen der Filterpatronen 28 um etwa 30 Grad für 60 bis 200 ms die Druckluftzufuhr, wobei die Impulsdauer des Druckluftimpulses durch eine an sich bekannte Schaltung eingestellt wird. Die Reinigung der vier Filterpatronen 28 erfolgt vorzugsweise nacheinander, indem nacheinander jeweils ein Umfangssektor jeder Filterpatrone 28 mit Druckluft beaufschlagt wird, um so die jeweils erforderliche Druckluftmenge kleiner zu halten.

Zum Austausch der Filterpatronen 28 ist die Decke 90 der Reinluftabzugshaube 34 mit vier runden Serviceöffnungen 92 versehen, auf denen jeweils ein Verschlußdeckel 94 mit einem Schnellverschluß angebracht ist.

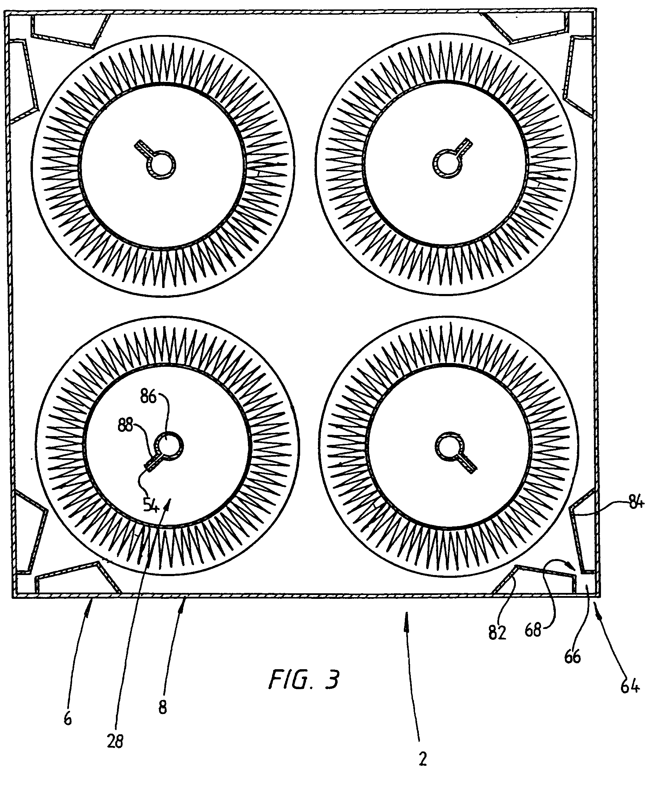

Im Unterschied zu dem Ausführungsbeispiel der Figuren 1 und 2 sind die vier Kanäle 66 der Auffangeinrichtung 64 bei dem Ausführungsbeispiel der Figur 3 in den vier Ecken des Gehäuses 6 angeordnet. Die Kanäle 66 weisen dort einen quadratischen Querschnitt und eine schmale schlitzförmige Einlaßöffnung 68 auf, die dem mit Druckluft beaufschlagbaren Umfangssektor der benachbarten Filterpatrone 28 gegenüberliegt und sich über die gesamte Länge der Patrone 28 erstreckt. Die Kanäle 66 werden jeweils von zwei vertikalen Leitblechen 82, 84 begrenzt, die nach innen überstehend an den Wänden des Gehäuseoberteils 8 befestigt sind und von der Außenseite der Filterpatronen 28 aus in Richtung der Einlaßöffnung 68 konvergieren, so daß die mit Feststoffpartikeln beladene Reinigungsluft zur Einlaßöffnung 68 hin beschleunigt wird. Die Kanäle 66 können entlang der Innenseite der Gehäusewand nach unten in den Sammelbehälter 14 führen oder jeweils am unteren Ende des Gehäuseoberteils 8 durch die Gehäusewand nach außen geführt werden, wo sie unmittelbar in einen oder mehrere Transportbehälter münden können.

An Stelle eines mit horizontalen Luftaustrittsöffnungen 54 versehenen, zur Längsachse der Filterpatronen 28 exzentrischen Spülluftrohrs 52 ist außerdem ein zentrales Spülluftrohr 86 vorgesehen, über dessen der Einlaßöffnung 68 gegenüberliegende Seite eine Düsenleiste 88 mit schräg nach unten gerichteten Luftaustrittsöffnungen 54 übersteht.

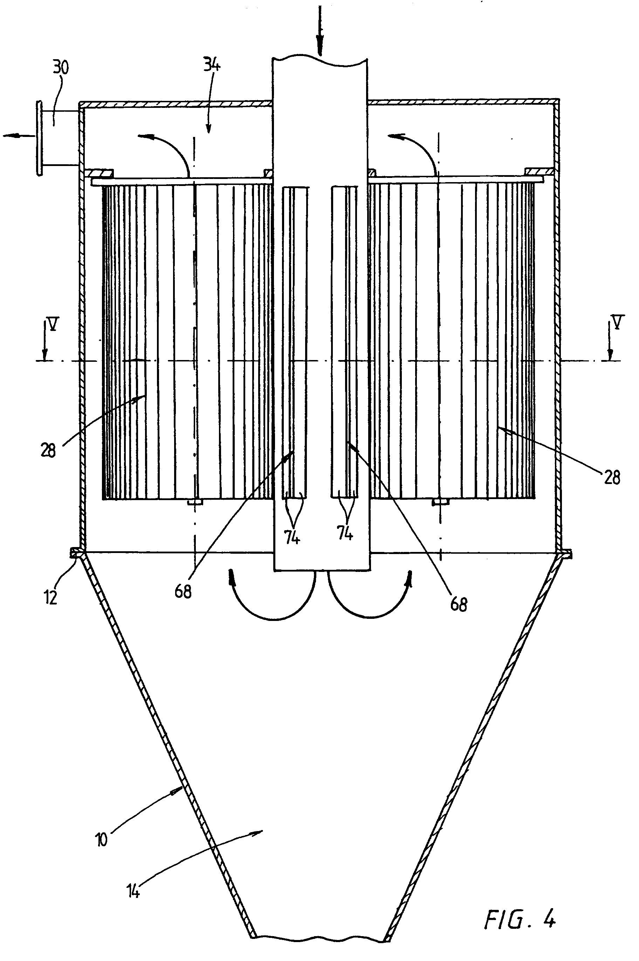

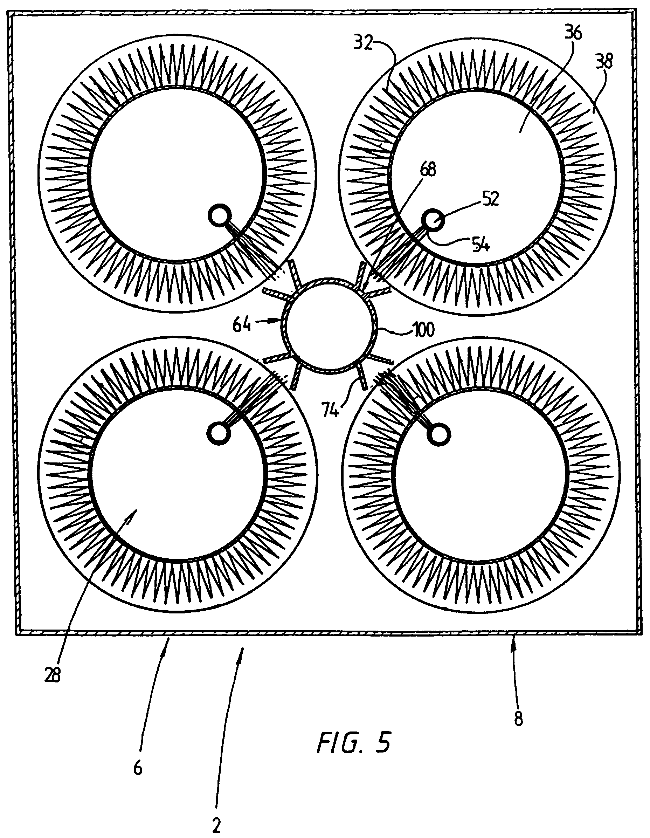

Bei dem Ausführungsbeispiel der Figuren 4 und 5 ist für alle vier Filterpatronen 28 ein einziges zentrales Auffangrohr 100 vorgesehen, durch das der produktbeladene Luftstrom von oben her an den Filterpatronen 28 vorbei in das Gehäuseunterteil 10 geleitet wird. Das Auffangrohr 100 weist vier vertikal ausgerichtete schmale schlitzförmige Einlaßöffnungen 68 auf, die den mit Druckluft beaufschlagbaren Umfangsteilen der Filterpatronen 28 über deren gesamte Länge gegenüberliegen, so daS die durch die Druckluft vom Filtermaterial 32 gelösten Feststoffpartikel in den nach unten gerichteten Luftstrom im Auffangrohr 100 eingetragen und von diesem nach unten in Richtung des Sammelraums 14 mitgerissen werden. Die vier Filterpatronen 28 werden hier immer gleichzeitig abgereinigt, so daß während der Reinigung zum einen der Luftstrom im Auffangrohr 100 durch die einströmende Reinigungsluft beschleunigt wird und zum anderen verhindert wird, daß die durch eine Einlaßöffnung 68 eintretende staubbeladene Reinigungsluft durch eine andere Einlaßöffnung 68 zum Teil wieder aus dem Auffangrohr 100 entweicht.

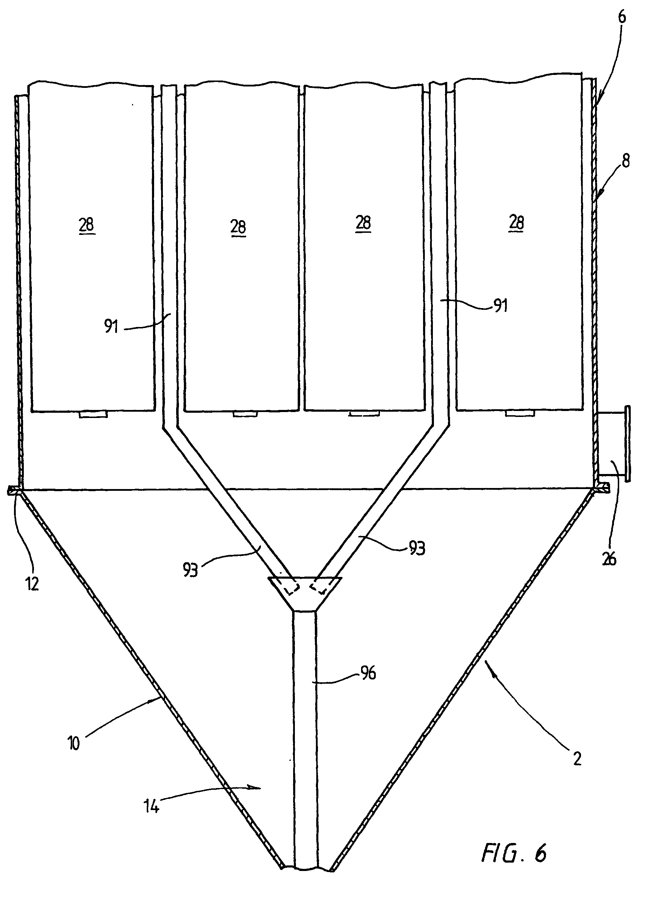

Bei dem in Fig. 6 dargestellten Produktabscheider 2 mit insgesamt acht paarweise nebeneinander im Gehäuse 6 angeordneten Filterpatronen 28 weist die Auffangeinrichtung 64 zwei getrennte Auffangrohre 91 auf, die jeweils wie bei dem Ausführungsbeispiel der Figuren 1 und 2 in der Mitte einer Gruppe von vier Filterpatronen 28 parallel zu deren Längsachsen nach unten verlaufen und vier getrennte Teilkanäle 66 mit schlitzförmigen Einlaßöffnungen 68 (nicht im einzelnen dargestelt) aufweisen, welche jeweils dem mit Druckluft beaufschlagbaren Umfangssektor der benachbarten Filterpatrone 28 gegenüberliegen. Die vier Teilkanäle 66 jedes Auffangrohrs 91 münden etwas unterhalb des unteren Endes der Filterpatronen 28 in ein gemeinsames Abfuhrrohr 93, das sich schräg nach unten bis zur Gehäusemitte erstreckt, wo die beiden Abfuhrrohre 93 in das trichterförmig erweiterte obere Ende eines Fallrohrs 96 münden, dessen unteres Ende unmittelbar oberhalb des Produktaustrags 16 im Sammelraum 14 angeordnet ist.

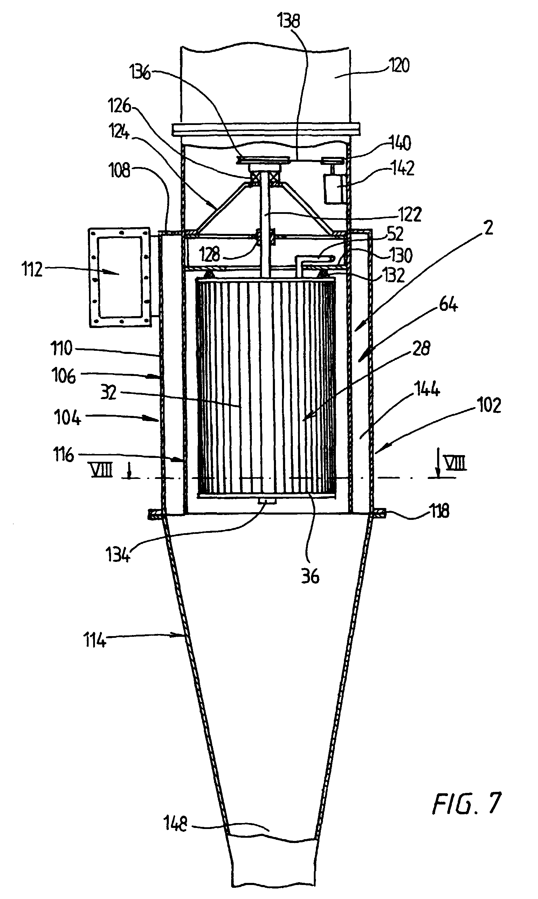

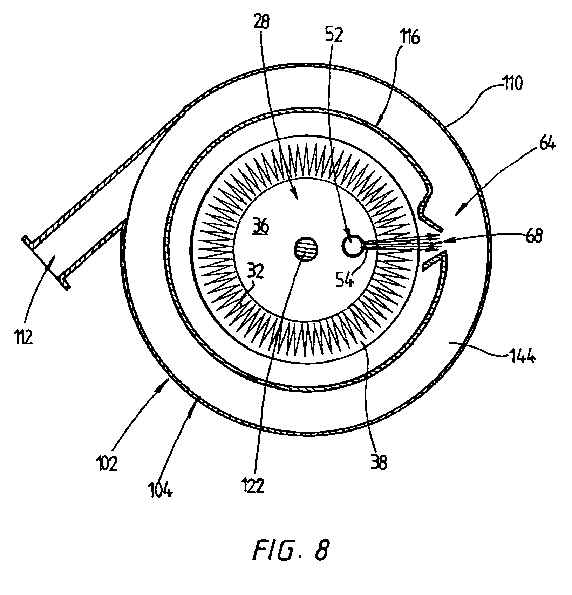

Bei dem Ausführungsbeispiel der Figuren 7 und 8 weist der Produktabscheider 2 eine einzige Filterpatrone 28 auf, die im Inneren eines Zyklons 102 angeordnet ist. Mit dieser Kombination ist gleichzeitig eine Abscheidung gröberer und feinerer Feststoffpartikel aus einem produktbeladenen Luftstrom möglich, der von einem reinluftseitig angeordneten Gebläse (nicht dargestellt) durch den Zyklon 102 gesaugt wird.

Der Zyklon 102 weist ein Gehäuse 104 auf, das im wesentlichen aus einem zylindrischen Oberteil 106 mit einem horizontalen oberen Stirnende 108 und einem auf seiner vertikalen Außenwand 110 in der Nähe des Stirnendes 108 angeordneten Lufteinlaß 112, einem kegelstumpfförmigen Unterteil 114 mit einem am unteren Ende angeordneten Produktaustrag (nicht dargestellt), sowie dem von oben durch das Stirnende 108 in das Oberteil 106 ragenden, nach unten offenen Tauchrohr 116 besteht. Das nach oben über das Gehäuse 104 überstehende obere Ende 118 des Tauchrohrs 116 ist durch eine Luftleitung 120 mit dem Gebläse verbunden, das den produktbeladenen Luftstrom durch den Zyklon 102 und den Produktabscheider 2 saugt. Wie bei dem Ausführungsbeispiel der Figuren 1 und 2 ist das Unterteil 114 entlang einer horizontalen Flanschverbindung 118 durch Schnellverschlüsse mit dem Gehäuseoberteil 106 verbunden, so daß es zum Austausch der Filterpatrone 28 leicht abgenommen oder abgeklappt werden kann.

Die Filterpatrone 28 wird von einer Drehwelle 122 gehalten, die in einem über der Reinluftaustrittsöffnung der Filterpatrone 28 angeordneten ortsfesten Korb 124 an zwei in vertikalem Abstand angeordneten Stellen in Drehlagern 126, 128 drehbar gelagert ist, von denen das obere (126) als Axial/Radiallager ausgebildet ist und die Drehwelle 122 mit der Filterpatrone 28 trägt. Der Korb 124 stützt sich auf der Oberseite einer in das Tauchrohr 116 eingeschweißten ringförmigen horizontalen Trennwand 130 ab. Zwischen der Unterseite der Trennwand 130 und dem oberen Stirnende der Filterpatrone 28 ist eine Gleitringdichtung 132 angeordnet, die einen Vorbeitritt von produktbelasteter Luft an der Filterpatrone 28 verhindert.

Das abgesetzte untere Ende der Drehwelle 122 steht durch eine mittige Öffnung im Boden 36 der Filterpatrone 28 nach unten über, wobei der überstehende Wellenstumpf mit geringerem Durchmesser ein Außengewinde aufweist, auf das eine Gewindekappe 134 aufgeschraubt ist, welche die Filterpatrone 28 auf der Drehwelle 122 hält und die Öffnung im Boden 36 der Filterpatrone 28 abdichtet.

Das obere Ende der Drehwelle 122 trägt ein Antriebsrad 136, das über einen Zahnriementrieb 138 mit dem Abtriebsritzel 140 eines Getriebemotors 142 verbunden ist, der die Filterpatrone 28 langsam um ihre vertikale Längsachse dreht.

Innerhalb der Filterpatrone 28 befindet sich wie bei den zuvor beschriebenen Ausführungsbeispielen ein ortsfestes axiales Spülluftrohr 52 mit Luftaustrittsöffnungen 54, die einem Umfangssektor der Filterpatrone 28 gegenüberliegen und zur Reinigung des Filtermaterials 32 mit Druckluft beaufschlagbar sind, welche dann entgegen der Strömungsrichtung des Luftstroms durch das Filtermaterial 32 strömt und die auf dessen Außenseite anhaftenden Feststoffpartikel mitreißt (Fig. 8).

Die Auffangeinrichtung 64 wird bei diesem Ausführungsbeispiel von der zylindrischen Außenwand 110 des Gehäuseoberteils 106 und dem zylindrischen Tauchrohr 116 gebildet, die einen Ringraum 144 begrenzen. Das Tauchrohr 116 ist gegenüber von den Luftaustrittsöffnungen 54 des Spülluftrohrs 52 mit einer Einlaßöffnung 68 versehen, durch welche die abgereinigten Feststoffpartikel in der Ringraum 144 zwischen der Wand 110 und dem Tauchrohr 116 eintreten. Die Einlaßöffnung 68 kann im einfachsten Fall von einem schmalen Längsschlitz in der Wand des Tauchrohrs 116 gebildet werden oder sich, wie in Fig. 8 dargestellt, trichterförmig verjüngen, um die Spülluft mit den mitgerissenen Feststoffpartikeln vor dem Eintritt in den Ringraum 144 der Auffangeinrichtung 64 zu beschleunigen. Bei diesem Ausführungsbeispiel tritt der produktbeladene Luftstrom durch den Lufteinlaß 112 tangential ins Innere des Oberteils 106 ein, wo die Luft durch den Ringraum 144 spiralig nach unten strömt, so daß sie die Abwärtsbewegung der durch die Einlaßöffnung 68 hindurchgetretenen Feststoffpartikel im Ringraum 144 infolge der Schwerkraft unterstützt. Die im Luftstrom enthaltenen Feststoffpartikel werden durch dessen spiralige Bewegung von Zentrifugalkräften in die Nähe der Außenwand 110 transportiert, wo am unteren Ende des Tauchrohrs 116 ein großer Teil der Feststoffpartikel infolge der Erweiterung des Strömungsquerschnitts und der Umlenkung des Luftstroms nach innen und oben entlang der Außenwand nach unten aus dem Luftstrom ausgetragen wird und in einem vom unteren Ende des Unterteils 114 gebildeten Sammelbehälter 148 sedimentiert. Die restlichen Feststoffpartikel treten zusammen mit dem Luftstrom in das untere Ende des Tauchrohrs 116 ein, von wo aus der Luftstrom entlang einer vertikalen Mittelachse des Gehäuses 104 spiralig nach oben steigt und von außen nach innen durch das Filtermaterial 32 hindurchtritt. Dabei werden die Feststoffpartikel auf der Außenseite des Filtermaterials 32 abgeschieden, während der gereinigte Luftstrom durch das offene obere Stirnende der Filterpatronen 28 in die Luftleitung 120 strömt.

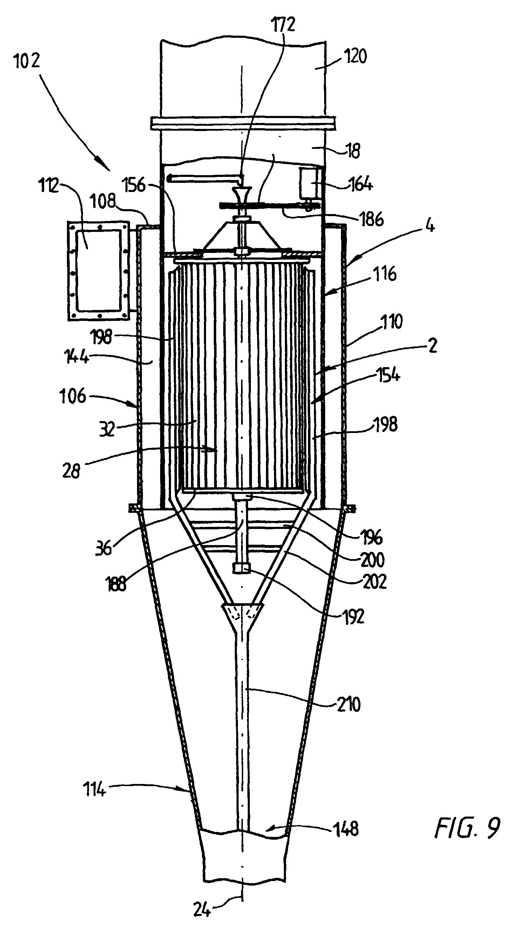

Das in den Figuren 9 bis 11 dargestellte Ausführungsbeispiel zeigt ebenfalls einen Zyklon 102, in dessen Tauchrohr 116 ein noch anderer Produktabscheider 2 eingesetzt ist. Im Unterschied zu den Ausführungsbeispielen der Figuren 7 und 8 ist bei diesem Produktabscheider 2 an Stelle einer drehbar gelagerten und mit einem Antrieb versehenen Filterpatrone 28 sowie einer ortsfesten Spül- bzw. Auffangeinrichtung eine ortsfest in das Tauchrohr 116 eingesetzte Filterpatrone 28 sowie eine als Einheit um die vertikale Mittelachse 24 der Filterpatrone drehbare Spül- und Auffangeinrichtung 152 und 154 vorgesehen.

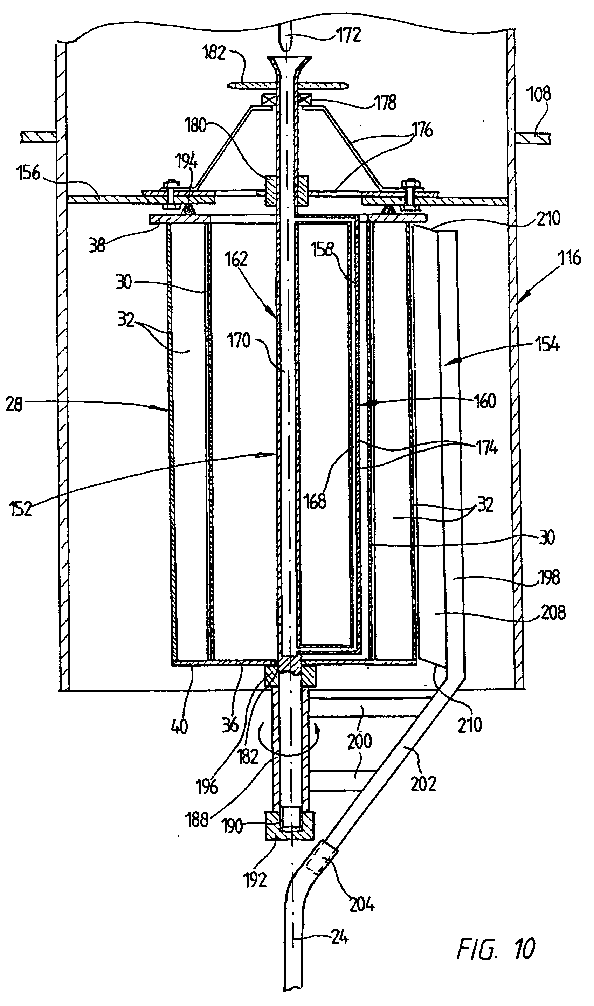

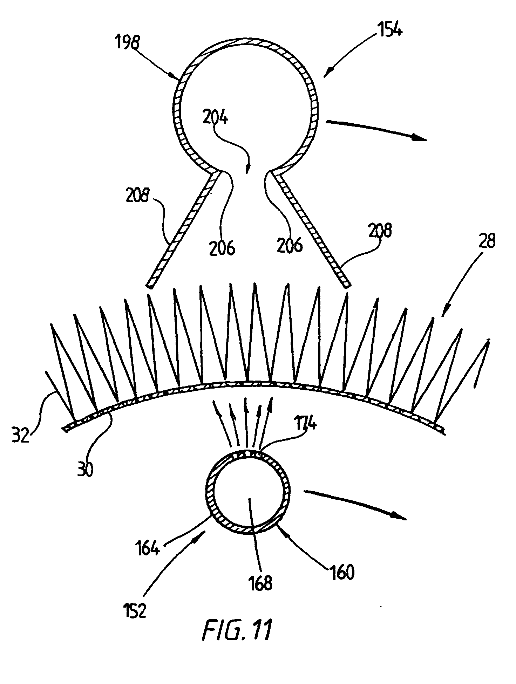

Wie am besten in Fig. 10 dargestellt, umfaßt die Spüleinrichtung 152 ein im Inneren der Filterpatrone 28 angeordnetes bügelförmiges Spülluftrohr 160, das über eine Seite einer entlang der Längsmittelachse 24 der Filterpatrone 28 verlaufenden vertikalen Drehwelle 162 radial übersteht, so daß ein axiales Teilstück 158 des Spülluftrohrs 160 in geringem Abstand von der Innenseite des Filtermaterials 32 im wesentlichen über die gesamte Patronenlänge verläuft. Die Drehwelle 162 ist oberhalb der Filterpatrone 28 mit einem Drehantrieb 164 (Fig. 9) verbunden, der sie schrittweise um die Achse 24 dreht, wobei der Drehwinkel jeweils etwa dem mit Spülluft beaufschlagten Umfangswinkel der Filterpatrone 28 entspricht. Die Drehwelle 162 ist von ihrem oberen Ende aus bis in die Nähe des Bodens 36 der Filterpatrone 28 als Hohlwelle ausgebildet und umschließt einen Luftkanal 170, in den am oberen und unteren Ende der Patrone 28 ein vom Spülluftrohr 160 umschlossener Luftkanal 168 mündet. Über dem trichterförmig erweiterten oberen Ende der Hohlwelle 162 ist eine Spülluftdüse 172 angeordnet, deren Luftaustrittsöffnung nach unten in das offene obere Ende der Hohlwelle 162 gerichtet ist, so daß impulsartig aus der Düse 172 austretende Druckluft oder kontinuierlich in die Düse 172 zugeführte Gebläseluft in den Luftkanal 170 der Kohlwelle 162 gelenkt wird. Von dort aus strömt die Spülluft in das Spülluftrohr 160, das auf seinem vertikalen Teilstück 158 mehrere Reihen von versetzt angeordneten horizontalen oder schräg nach unten weisenden Luftaustrittsöffnungen 174 in Form von Bohrungen oder Schlitzen aufweist (Fig. 10 und 11).

Die Drehwelle 162 ist in einem oberhalb der oberen Reinluftaustrittsöffnung der Filterpatrone 28 angeordneten ortsfesten Korb 176 an zwei in vertikalem Abstand angeordneten Stellen in Drehlagern 178, 180 drehbar gelagert, wobei das obere (178) der beiden Drehlager 178, 180 als Axial/Radiallager ausgebildet ist, das die Drehwelle 162 mit der Spüleinrichtung 152 und der Auffangeinrichtung 154 trägt. Der Korb 176 stützt sich auf einer in das Tauchrohr 16 des Zyklons 102 eingeschweißten horizontalen Trennwand 156 ab, die einen Vorbeitritt von staubbelasteter Luft an der Filterpatrone 28 verhindert.

Zwischen dem trichterförmig erweiterten oberen Ende der Drehwelle 162 und dem Axial/Radiallager 178 ist auf der Drehwelle 162 ein Antriebsritzel 182 drehfest angebracht, das vom Drehantrieb 164, vorzugsweise einem Getriebemotor, über einen Riementrieb 186 (Fig. 9) kontinuierlich mit geringer Geschwindigkeit gedreht wird. An Stelle des Getriebemotors kann auch ein Druckluftschwenkzylinder vorgesehen sein, der die Drehwelle 162 über ein Schaltwerk schrittweise um vorbestimmte Drehwinkel dreht.

Das untere Ende der Drehwelle 162 steht durch eine kreisförmige mittige Öffnung 196 im Boden 36 der Filterpatrone 28 nach unten über und ist entweder massiv ausgebildet oder durch eine kleine Trennwand verschlossen, so daß durch die Welle 162 hindurch kein Luftaustausch zwischen der Staubluftseite und der Reinluftseite möglich ist. Auf das überstehende untere Ende der Drehwelle 162 ist eine Buchse 188 aufgeschoben, die beispielsweise mittels einer Nut- und Gleitfederverbindung (nicht dargestellt) drehfest mit der Drehwelle 162 verbunden ist. Das aus dem unteren Ende der Buchse 188 ragende Stirnende der Drehwelle 162 ist mit einem Außengewinde 190 versehen, auf das eine Gewindekappe 192 aufgeschraubt wird, bis die Buchse 188 bzw. eine an deren oberem Ende angebrachte Drehdichtung 196 gegen den Boden 36 der Filterpatrone 28 anschlägt und die Filterpatrone 28 mit dem oberen Ringflansch 38 gegen die Unterseite der Trennwand 156 gedrückt wird. Dadurch wird die Buchse 188 axial unverschiebbar festgehalten, während gleichzeitig die Drehdichtung 196 und ein zwischen dem Ringflansch 38 und der Trennwand 156 angeordneter Dichtring 194 für eine Abdichtung zwischen der Staubluftseite und der Reinluftseite sorgen. Die gegen den Boden 36 anliegende Drehdichtung 196 mit kleinem Durchmesser ist so ausgebildet, daß sie unter Abdichtung der Öffnung 196 eine Drehung der Drehwelle 162 und der Buchse 188 in Bezug zur Patrone 28 gestattet.

Die Auffangeinrichtung 154 besteht im wesentlichen aus einem außerhalb der Filterpatrone 28 und innerhalb des Tauchrohr 16 axial angeordneten vertikalen Auffangrohr 198. Das Auffangrohr 198 wird von zwei radial über die Buchse 188 überstehenden Auslegern 200 getragen, die starr an einem Abfuhrrohr 202 befestigt sind, das mit dem unteren Ende des Auffangrohrs 198 verbunden ist und sich von dort aus schräg nach unten zur Achse 24 erstreckt. Auf das untere Ende des Abfuhrrohrs 202 ist ein flexibler Schlauch 204 aufgesteckt, dessen unteres Ende (nicht dargestellt) knapp über dem Produktaustrag innerhalb des Sammelbehälters 148 des Gehäuseunterteils 114 mündet.

Die Einlaßöffnung 204 des langgestreckten zylindrischen Auffangrohrs 198 ist schlitzförmig ausgebildet und erstreckt sich über die gesamte Länge der Filterpatrone 28, wobei sie im wesentlichen in derselben Vertikalebene wie die Luftaustrittsöffnungen 174 des Spülluftrohrs 160 angeordnet ist, so daß sich die Luftaustrittsöffnungen 174 und die Einlaßöffnung 204 auf entgegengesetzten Seiten des Filtermaterials 32 in geringem Abstand gegenüberliegen. Zwischen den entgegengesetzten Seitenrändern 206 der Einlaßöffnung 204 und der Filterpatrone 28 sind zwei in Richtung der Einlaßöffnung 204 konvergierende vertikale Leitbleche 208 angebracht, die starr mit dem Auffangrohr 198 verbunden sind und dazu dienen, die zusammen mit den mitgerissenen Feststoffpartikeln in die Einlaßöffnung 204 eintretende Spülluft zu beschleunigen. Schräge Bleche 210 am oberen bzw. am unteren Ende des Auffangrohrs 198 dienen ebenfalls dazu, die Spülluft in die Einlaßöffnung 204 zu lenken.

Die von der Spülluft in die Einlaßöffnung 204 mitgerissenen Feststoffpartikel werden (getrennt vom Luftstrom im Tauchrohr 116) allein von der Spülluft und der auf sie einwirkenden Schwerkraft, d.h. ohne eine Beaufschlagung der Auffangeinrichtung 154 mit einem Unterdruck durch das Auffangrohr 198, das Abfuhrrohr 202 und den Schlauch 204 nach unten in den Sammelbehälter im Unterteil 114 des Zyklons 102 transportiert, wo sie sedimentieren, während die Spülluft wieder nach oben zur Filterpatrone 28 strömt, wo sie durch das Filtermaterial 32 hindurchtritt und gereinigt wird.

Im Unterschied zu dem Ausführungsbeispiel der Fig. 10 weist das in Fig. 9 dargestellte Ausführungsbeispiel zwei Spülluftrohre 160 (nicht sichtbar) und zwei Auffangrohre 198 auf, die jeweils diametral angeordnet sind, um die Auswuchtung der Drehwelle 162 zu verbessern. Die beiden mit den Auffangrohren 198 verbundenen schrägen Abfuhrrohre 202 münden dort auf der Achse 24 in ein vertikales Fallrohr 210, das entlang der Achse 24 nach unten bis in die Nähe des Produktaustrags in den Sammelbehälter 148 führt.

## Patentansprüche

1. Produktabscheider zur Abscheidung von Feststoffpartikeln aus einem Gasstrom, mit mindestens einer in einem Gehäuse angeordneten, im wesentlichen zylindrischen Filterpatrone mit einem auf ihrem gesamten Umfang vom Gasstrom durchströmten Filtermaterial, sowie einer Reinigungsvorrichtung zur Reinigung des Filtermaterials auf einem Teil des Umfangs der Filterpatrone mit Spülluft im Gegenstrom, die eine mit mindestens einer Luftaustrittsöffnung versehene Spüleinrichtung zum Beaufschlagen des Umfangsteils mit Spülluft und eine mit mindestens einer Einlaßöffnung versehene Auffangeinrichtung zum Auffangen der von der Spülluft mitgeführten abgereinigten Feststoffpartikel umfaßt, wobei die Spüleinrichtung und die Auffangeinrichtung einerseits und die Filterpatrone andererseits in Bezug zueinander um eine Längsachse der Filterpatrone drehbar sind, wobei sich die Luftaustritts- bzw. Einlaßöffnungen entlang des zu reinigenden Umfangsteils der Filterpatrone auf entgegengesetzten Seiten des Filtermaterials gegenüberliegen und wobei die in die Einlaßöffnung der Auffangeinrichtung mitgeführten abgereinigten Feststoffpartikel getrennt vom Gasstrom in einen unterhalb der Filterpatrone angeordneten und mit dem Inneren des Gehäuses verbundenen Sammelbehälter transportiert werden, dadurch gekennzeichnet, daß die Längsachse (24) der Filterpatrone (28) vertikal ausgerichtet ist.

2. Produktabscheider nach Anspruch 1, dadurch gekennzeichnet, daß die Auffangeinrichtung (64, 154) mindestens einen innerhalb des Gehäuses (6, 110) angeordneten rohrförmigen Abfuhrkanal (66, 100, 202) zum Abführen der Feststoffpartikel in den Sammelbehälter (14, 148) umfaßt.

3. Produktabscheider nach Anspruch 1 oder 2, dadurch gekennzeichnet, daß der Sammelbehälter (14, 148) von einem unter der Filterpatrone (28) angeordneten Unterteil (10, 114) des Gehäuses (6, 110) begrenzt wird.

4. Produktabscheider nach einem der Ansprüche 1 bis 3, dadurch gekennzeichnet, daß die Filterpatrone (28) mittels eines Drehantriebs (56, 142) um ihre Längsachse (24) drehbar ist, um die zu reinigenden Umfangsteile nacheinander an der Spüleinrichtung (52, 86) und der Auffangeinrichtung (64) vorbeizubewegen, die ortsfest im Gehäuse (6, 110) angebracht sind.

5. Produktabscheider nach Anspruch 4, dadurch gekennzeichnet, daß die Auffangeinrichtung (64) an ihrem oberen Ende mindestens mit einem Teil des mit Feststoffpartikeln beladenen Gasstroms beaufschlagbar ist.

6. Produktabscheider nach Anspruch 4 oder 5, dadurch gekennzeichnet, daß das Gehäuse (6) mindestens zwei Filterpatronen (28) beherbergt, und daß die Filterpatronen (28) eine gemeinsame Auffangeinrichtung (64) aufweisen.

7. Produktabscheider nach einem der Ansprüche 1 bis 3, dadurch gekennzeichnet, daß die Spüleinrichtung (152) und die Auffangeinrichtung (154) mittels eines Drehantriebs (164) um die Längsachse (24) der Filterpatrone (28) drehbar sind, um sie gemeinsam an den zu reinigenden Umfangsteilen der ortsfest im Gehäuse (6, 110) angebrachten Filterpatrone (28) entlangzubewegen.

8. Produktabscheider nach Anspruch 7, dadurch gekennzeichnet, daß die Spüleinrichtung (152) und die Auffangeinrichtung (154) drehfest miteinander verbunden sind.

9. Produktabscheider nach einem der Ansprüche 1 bis 8, dadurch gekennzeichnet, daß die Spüleinrichtung (52, 152) intermittierend mit Spülluft beaufschlagbar ist.

10. Produktabscheider nach einem der Ansprüche 1 bis 9, dadurch gekennzeichnet, daß die Spüleinrichtung (52, 152) mit mindestens einem Teil des gereinigten Gasstroms beaufschlagbar ist.

11. Zyklon mit einem in seinem Tauchrohr angeordneten Produktabscheider nach einem der Ansprüche 1 bis 10.

12. Mobiler Staubsauger mit einem Produktabscheider nach einem der Ansprüche 1 bis 10.
